# EUROPEAN PATENT SPECIFICATION

(11) **EP 3 260 335 B1**
(45) Date of publication and mention of the grant of the patent: **07.11.2018**
(21) Application number: 16175597.0
(22) Date of filing: 22.06.2016
(51) Int. Cl.: B60T 10/02, F16D 57/02, A61H 3/04, F16D 121/18

(54) **BRAKING FORCE CONTROL STRUCTURE OF A WHEELED WALKING AID**
BREMSKRAFTSTEUERUNGSSTRUKTUR EINES ROLLATORS
STRUCTURE DE COMMANDE DE FORCE DE FREINAGE DE DÉAMBULATEUR AVEC ROUES

(43) Date of publication of application: 27.12.2017
(73) Proprietor: Long Yue Cast-Press Co., Ltd., New Taipei City 248 (TW); Lin, Tung-Yi, New Taipei City 248 (TW)
(72) Inventor: Lin, Tung-Yi, 248 New Taipei City (TW)
(74) Representative: Lang, Christian

(56) References cited:
- DE-A1-102013 221 084
- FR-A3- 2 976 990
- GB-A- 2 527 542

## Description

### BACKGROUND OF THE INVENTION

### (a) Field of the Invention

The present invention relates to a braking force control structure of a wheeled walking aid, and more particularly to a braking force control structure of a wheeled walking aid that enables adjusting the speed limit of a wheel.

### (b) Description of the Prior Art

In general, patients who undergo surgical treatment for pathological changes in their spine and lower limbs still find their ability to move around difficult. Hence, the patients still need to use a support frame to assist them in getting about. However. when the rehabilitant wants to move about, they need to continuously lift the support frame to move the support frame forward with every step they make, which is clearly neither practical nor convenient.

Wheeled walking aids in the current market can be roughly divided into fixed mobility aids and wheeled walking aids. The majority of users using such devices are patients suffering from weakening of the lower limb muscles, physically challenged senior citizens, stroke victims, or persons inflicted with infantile paralysis, all of whom lack the ability to move around independently, and have poor balance ability.

Wheeled walking aids of the prior art are all assembled using a simple support frame for use by the patient. And for the patient with feet disabilities and unable to stand, then they can use a wheelchair (mobile aid) as a substitute.

FR 2 976 990 A3 discloses a rolling unit for use in a trolley walker for assisting a handicapped person in hospital with a housing filled by viscous fluid, where fluid enters between profile of housing of rim and profile of pinion to limit rotation speed of pinion.

Using a fixed wheeled walking aid can relieve the patient's lower limbs when standing. However, when moving, the patient must lift up the wheeled walking aid him/herself to move forward before stepping forward.

Although the aforementioned wheeled walking aids of the prior art provide the function to aid mobility, however, they still have the following shortcoming: when the wheel speed is excessively fast, because a deceleration system is not installed in the wheeled walking aids of the prior art, thus, the patient is frequently put in danger.

Currently, a brake system provided in wheeled walking aids of the prior art usually consists of a simple brake to achieve a deceleration effect, which easily results in disequilibrium, causing the frame of the mobile aid to lean and topple over.

Hence, it can be seen that many shortcomings still exist in the aforementioned wheeled walking aids of the prior, and in reality are not good designs that are in need of urgent improvement.

In light of the above shortcomings existent in the wheeled walking aids of the prior art, the inventor of the present invention has actively researched innovative improvements, and through painstaking efforts and careful study over many years finally succeeded in developing a braking force control structure of a wheeled walking aid of the present invention.

### SUMMARY OF THE INVENTION

The main object of the present invention lies in providing a method using damping oil or magnetic force as a braking force control structure to limit the rotational speed of a wheeled walking aid.

A second object of the present invention lies in providing a method to control the displacement of first magnetic elements within a movable member to vary the magnetic force of second magnetic elements within a fixing member therebetween to control the speed limit of a wheel. Moreover, an adjustable mechanism is used to control changes in the height of damping oil level to control the rotational speed of the wheel.

In order to achieve the aforementioned objects, a braking force control structure of a wheeled walking aid of the present invention is pivot mounted on a wheel of a wheeled walking aid, and comprises: a wheel housing, a holding space formed within the wheel housing, a fixing member, damping oil, and a wheel shaft disposed in the holding space, the fixing member is disposed in the holding space of the wheel housing, wherein one end of the wheel shaft penetrates the fixing member, and a fixing insert pin is used to penetrate and rigidly fix the fixing member; a wheel outer cover, which is disposed on the wheel housing and covers the holding space to form a sealed space, the interior of the sealed space is filled with the damping oil, wherein the wheel outer cover enables the other end of the wheel shaft to penetrate therethrough. In order to control the wheel speed and thereby increase the stabilizing effect of a wheeled frame, an adjustable mechanism and a movable member can be added to the structure. The adjustable mechanism penetrates the movable member and the wheel housing and connects to the wheel shaft, wherein the adjustable mechanism controls displacement of the movable member within the holding space to enable adjusting the height of the damping oil level. The structure of the present invention is further provided with a ventilation structure, which is disposed on the outer side of the wheel housing or the outer side of the wheel outer cover to enable entering and expelling of air into the sealed space.

Another embodiment of the braking force control structure of a wheeled walking aid of the present invention uses magnetic force as a substitute for the damping oil. The structure is still pivot mounted on the wheel of a wheeled walking aid, and comprises: the wheel housing, the holding space formed within the wheel housing, the movable member, the fixing member, first magnetic elements, second magnetic elements, and the wheel shaft disposed within the holding space, wherein the first magnetic elements and the second magnetic elements are disposed on the movable member and the fixing member respectively, one end of the wheel shaft penetrates the fixing member, and the fixing insert pin is used to penetrate and rigidly fix the fixing member; the wheel outer cover, which is disposed on the wheel housing and covers the holding space to form a sealed space, wherein the wheel outer cover enables the other end of the wheel shaft to penetrate therethrough. In order to achieve a stabilising effect of the wheeled frame, the adjustable mechanism is further added to control the rotational speed of the wheel. The adjustable mechanism penetrates the movable member and the wheel shaft and connects to the wheel shaft, wherein the adjustable mechanism controls displacement of the movable member within the holding space.

In order to provide the magnets within the movable member with an autorotation function to enable change in magnetic force and increase the stabilizing effect of the wheeled frame, the braking force control structure of the wheeled walking aid of the present invention is pivot mounted on a wheel of the wheeled walking aid, and comprises: the wheel housing, the holding space formed within the wheel housing, the movable member, the fixing member, the first magnetic elements, the second magnetic elements, a big gear wheel, small gear wheels, and the wheel shaft disposed within the holding space, wherein the first magnetic elements and the second magnetic elements are disposed on the movable member and the fixing member respectively, the first magnetic elements are covered within the movable member and further extend to the small gear wheels. After the big gear wheel is fixed to the wheel shaft, the big gear wheel moves in unison with the wheel. The small gear wheels mutually connect with the big gear wheel, wherein the number of small gear wheels is one or more than one. The gear mechanism is able to assist in providing the magnets within the movable member with an autorotation function to enable change in magnetic force and increase the stabilizing effect of the wheeled frame. One end of the wheel shaft penetrates the fixing member and the big gear wheel, and the fixing insert pin is used to penetrate and rigidly fix the fixing member. The structure further comprises a wheel outer cover, which is disposed on the wheel housing and covers the holding space to form a sealed space, wherein the wheel outer cover enables the other end of the wheel shaft to penetrate therethrough. The adjustable mechanism can be further added to the structure, wherein the adjustable mechanism penetrates the fixing member and the wheel shaft and connects to the wheel shaft, wherein the adjustable mechanism controls displacement of the fixing member within the holding space, thereby further achieving the effectiveness of controlling resistance.

According to the aforementioned embodiment of the present invention, the movable member is also internally configured with one or more than one holding spaces to dispose the first magnetic elements. The first magnetic elements are magnets or magnetic response objects, and the number thereof can be one or more than one.

As for the fixing member, the interior thereof can be provided with one or more than one holding spaces to enable the second magnetic elements to be disposed therein. The second magnetic elements are magnets or magnetic response objects, and the number thereof can be one or more than one.

The adjustable mechanism is connected to the wheel shaft and the wheel housing.

Accordingly, when the wheel rotates, the magnets or the magnetic response objects of the movable member are able to rotate synchronously with the wheel. Because of the magnetic force produced between the magnets or the magnetic response objects of the movable member and the magnets or the magnetic response objects of the fixing member, a resistance force is applied to the wheel, which further controls the rotational speed of the wheel, at the same time, the strength of the magnetic force is related to the contact area or distance between the magnets or the magnetic response objects on the movable member and the magnets or the magnetic response objects on the fixing member. Hence, the wheel speed can be controlled by making adjustments to the movable member or the displacement amount of the fixing member through the adjustable mechanism to control magnetic force area or distance.

Another object of the present invention lies in an embodiment of the structure of the present invention wherein the movable member and the fixing member can achieve the same effectiveness through a reversal design thereof.

To enable a further understanding of said objectives and the technological methods of the invention herein, a brief description of the drawings is provided below followed by a detailed description of the preferred embodiments.

### BRIEF DESCRIPTION OF THE DRAWINGS

Figure 1 is a structural schematic view of the present invention installed on a wheeled frame.
Figure 2 is an elevational schematic view of a damping mechanism of the present invention.
Figure 2-A is an elevational schematic view of the damping mechanism of the resistance adjustable control mechanism of the present invention.
Figure 3 is an exploded structural schematic view of the damping mechanism of the present invention.
Figure 3-A is an exploded structural schematic view of the damping mechanism of the resistance adjustable control mechanism of the present invention.
Figure 4 is a cross-sectional structural schematic view of the damping mechanism of the present invention.
Figure 4-A is a cross-sectional structural schematic view of the damping mechanism of the resistance adjustable control mechanism of the present invention.
Figure 5 is an elevational schematic view of a magnetic resistance mechanism of the present invention.
Figure 5-A is an elevational schematic view of the magnetic resistance mechanism of the resistance adjustable control mechanism of the present invention.
Figure 6 is an exploded structural schematic view of the magnetic resistance mechanism of the present invention.
Figure 6-A is an exploded structural schematic view of the magnetic resistance mechanism of the resistance adjustable control mechanism of the present invention.
Figure 7 is a cross-sectional structural schematic view of the magnetic resistance mechanism of the present invention.
Figure 7-A is a cross-sectional structural schematic view of the magnetic resistance mechanism of the resistance adjustable control mechanism of the present invention.
Figure 8 is an elevational schematic view of a gear wheel magnetic resistance mechanism of the present invention.
Figure 8-A is an elevational schematic view of the gear wheel resistance mechanism of the resistance adjustable control mechanism of the wheeled walking aid of the present invention.
Figure 9 is an exploded structural schematic view of the gear wheel magnetic resistance mechanism of the present invention.
Figure 9-A is an exploded structural schematic view of the gear wheel resistance mechanism of the resistance adjustable control mechanism of the wheeled walking aid of the present invention.
Figure 10 is a cross-sectional structural schematic view of the gear wheel magnetic resistance mechanism of the present invention.
Figure 10-A is a cross-sectional structural schematic view of the gear wheel resistance mechanism of the resistance adjustable control mechanism of the wheeled walking aid of the present invention.

### DETAILED DESCRIPTION OF THE PREFERRED EMBODIMENTS

The above-mentioned and objects, features and advantages of the present invention are clear and easily understood, and the detailed description below, together with the accompanying drawings, discloses the preferred embodiments of the present invention.

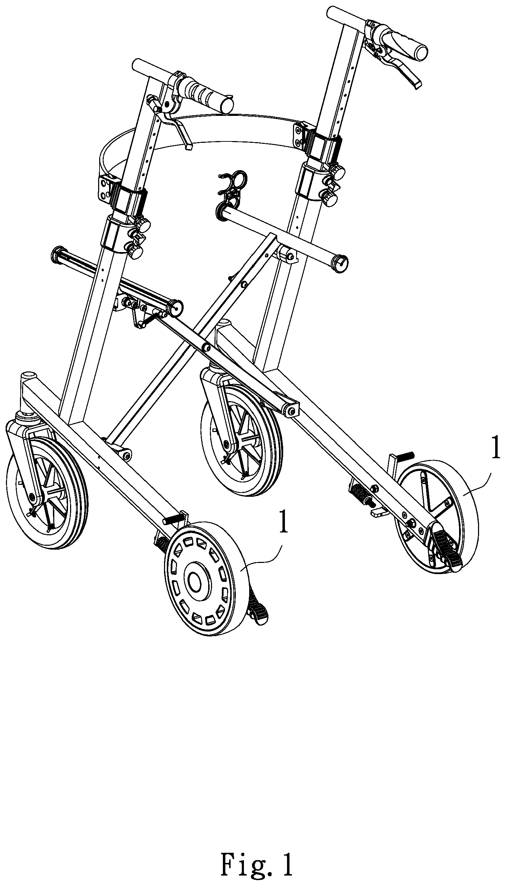

Referring to Figure 1, which shows a structural schematic view of the present invention installed on a wheeled frame, wherein the structure of the present structure is installed within wheel housings of the wheeled frame.

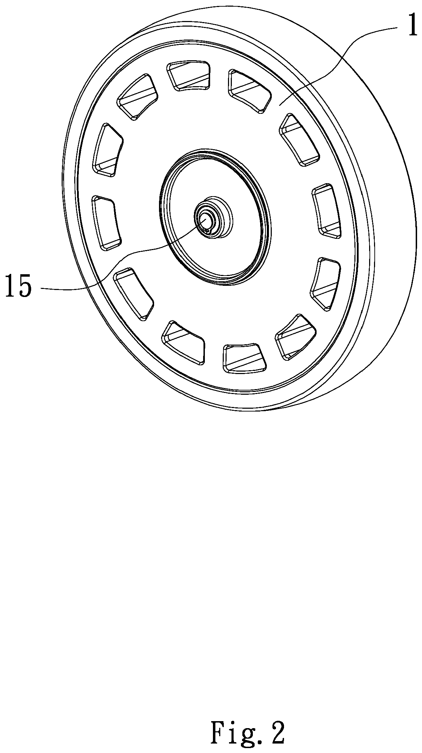

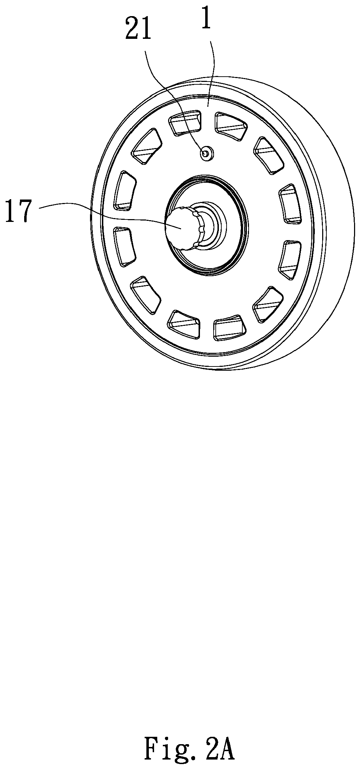

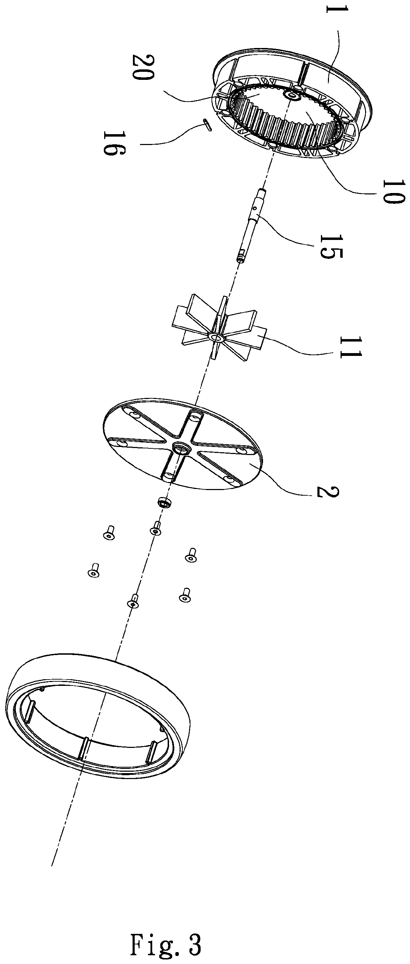

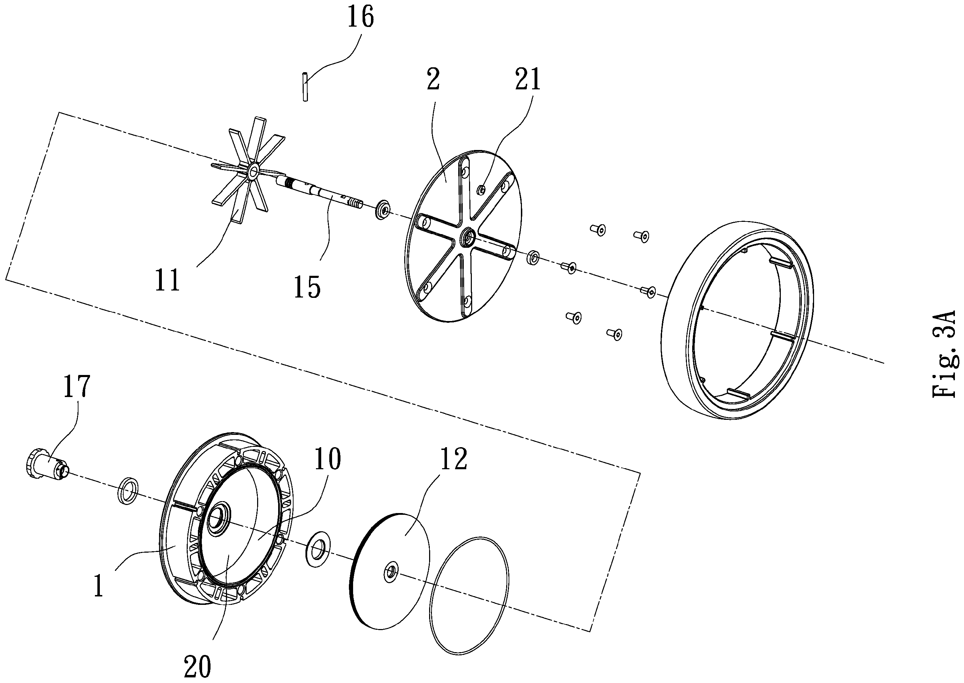

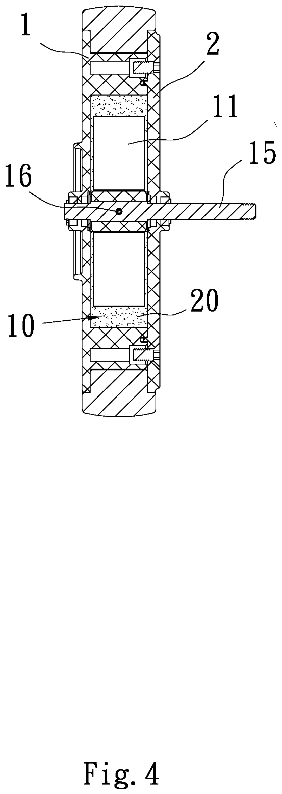

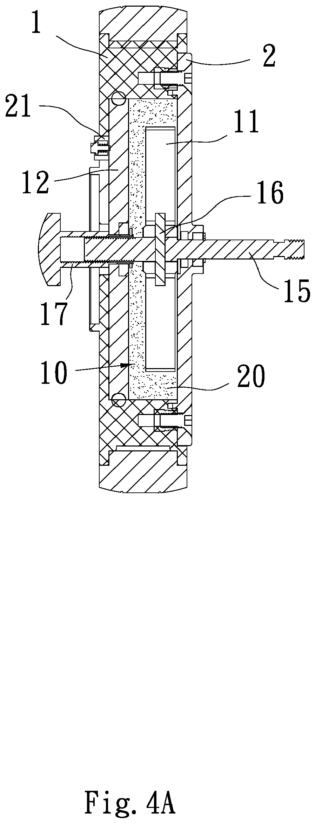

Referring to Figure 2, Figure 3 and Figure 4, which show an elevational schematic view of a damping mechanism, an exploded structural schematic view of the damping mechanism, and a cross-sectional structural schematic view of the damping mechanism of the present invention, respectively. A fixing member 11, damping oil 20, and a wheel shaft 15 are disposed in a holding space 10 provided within a wheel housing 1, wherein one end of the wheel shaft 15 penetrates the fixing member 11, and a fixing insert pin 16 is used to penetrate and rigidly fix the fixing member 11. A wheel outer cover 2 is disposed on the wheel housing 1 to cover the holding space 10 and form a sealed space, and the interior of the sealed space is filled with the damping oil 20. The other end of the wheel shaft 15 passes through the wheel outer cover 2. Furthermore, referring to Figure 2-A, Figure 3-A and Figure 4-A, in order to control the speed of the wheeled frame and increase the stabilizing effect thereof, an adjustable mechanism 17 and a movable member 12 are additionally installed. The adjustable mechanism 17 fittingly penetrates the movable member 12 and the wheel housing 1, and then connects to the wheel shaft 15, wherein the adjustable mechanism 17 controls displacement of the movable member 12 within the holding space 10 to adjust the height of the damping oil level. A ventilation structure 21 is further disposed on the wheel housing 1 or the wheel outer cover 2, and the ventilation structure 21 is used for the effective entering and expelling of air within the sealed space.

From the aforementioned it can be understood that smooth displacement of the movable member 12 is achieved by using the adjustable mechanism 17 to control movement thereof and using the ventilation structure 21 to achieve effective entering and expelling of air inside the sealed space within the wheel housing 1. Accordingly, the height of the damping oil level can be controlled, the area of the damping oil 20 the fixing member 11 is in contact with can be changed, and control of the rotational resistance of the wheel set can be achieved.

In addition, the wheel outer cover 2 needs to cover the outer side of the holding space 10 of the wheel housing 1 to enable sealing the holding space 10, primary reason being to prevent the damping oil 20 from being affected by external factors and causing serious deterioration thereof. In the aforementioned embodiments, apart from using the adjustable mechanism 17 to vary the height of the damping oil 20 level to control the wheel speed through the viscosity force of the damping oil 20, which will not produce mechanical noise, controlling the height of the damping oil 20 level through the adjustable mechanism 17 can also be used to change the acting surface area of the damping oil 20 acting on the fixing member 11, thus further achieving the effectiveness of controlling resistance.

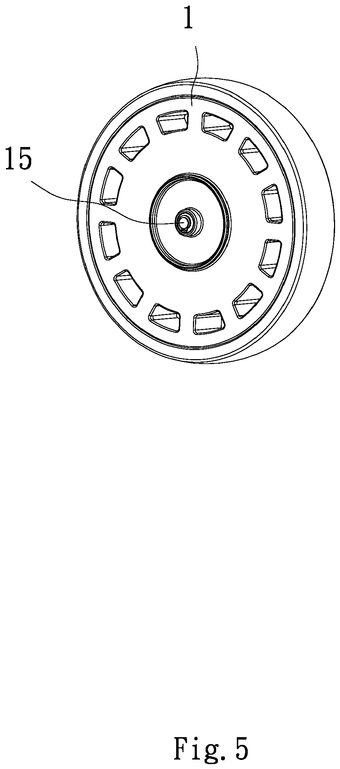

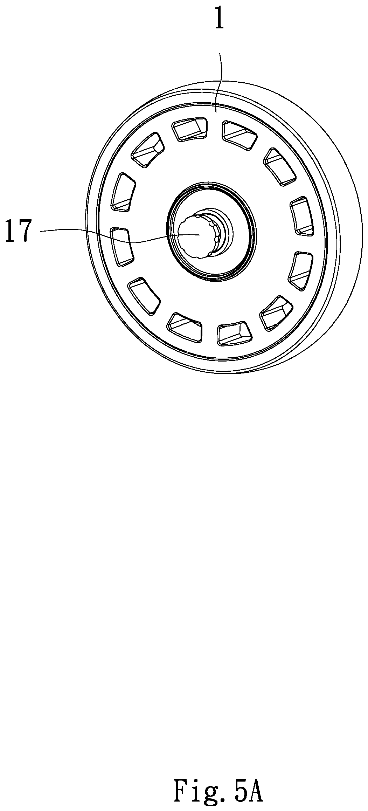

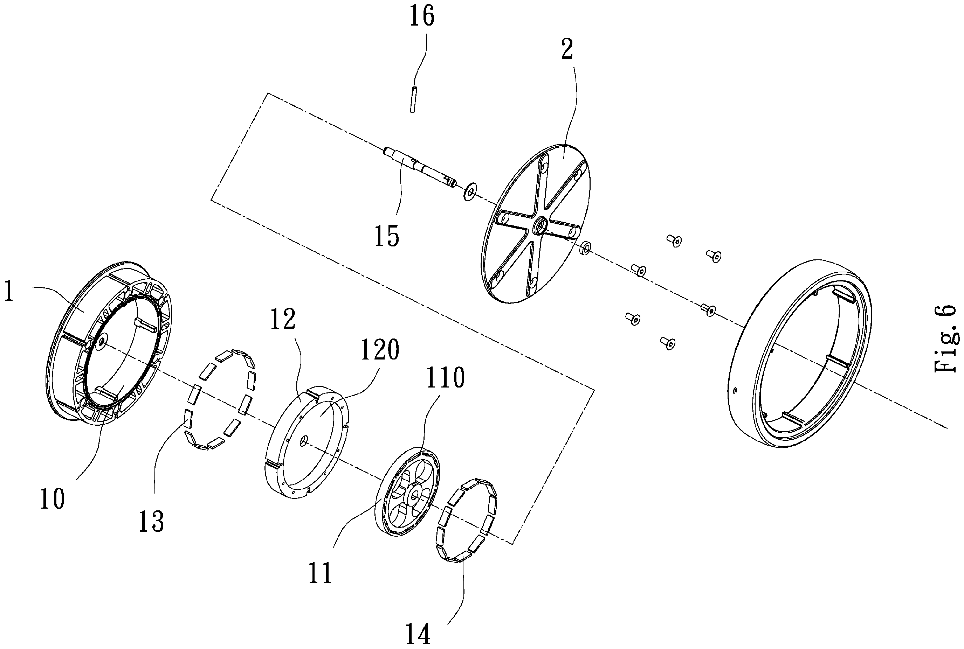

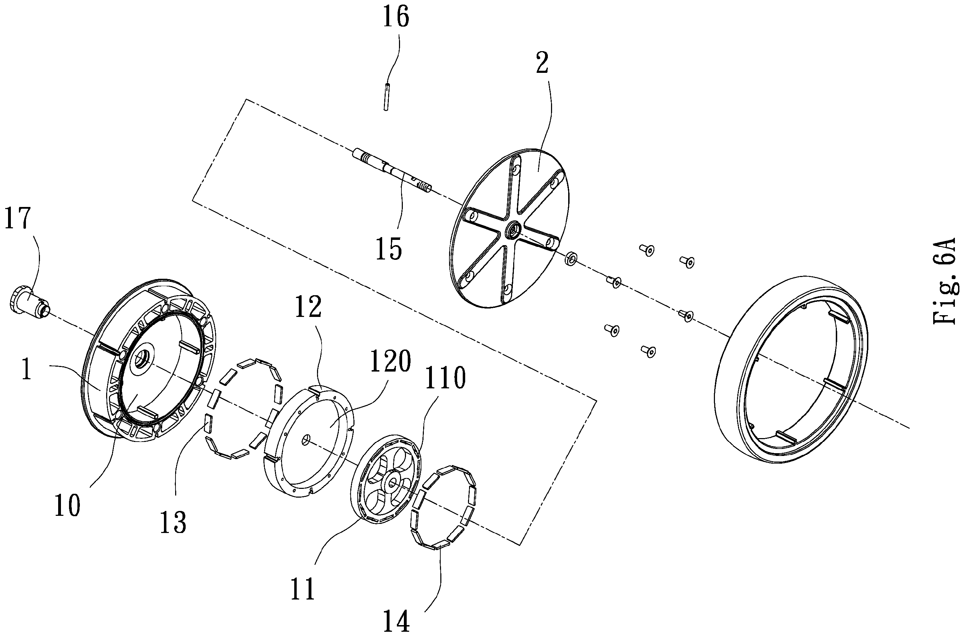

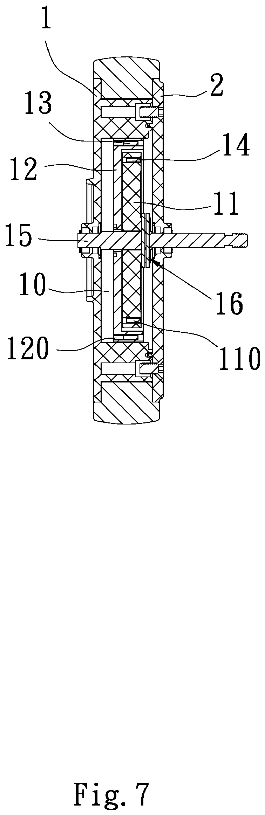

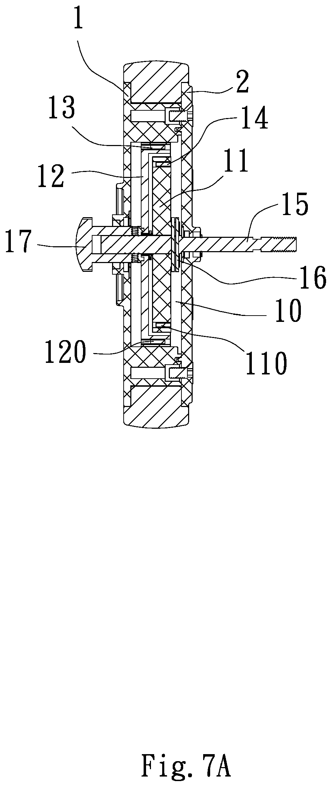

Referring to Figure 5, Figure 6, and Figure 7, which show another type of the braking force control structure of the wheeled walking aid that uses a magnetic force as an alternative for damping oil, wherein the structure is still pivot mounted on a wheel of the wheeled walking aid and primarily comprises the wheel housing 1 and the wheel outer cover 2. The holding space 10 is formed in the interior of the wheel housing 1, and the movable member 12, the fixing member 11, first magnetic elements 13, second magnetic elements 14, and the wheel shaft 15 are disposed in the holding space 10, wherein the first magnetic elements 13 and the second magnetic elements 14 are disposed on the movable member 12 and the fixing member 11 respectively. In addition, one end of the wheel shaft 15 penetrates the fixing member 11, and the fixing insert pin 16 is used to penetrate and rigidly fix the fixing member 11. The wheel housing 1 covers the wheel outer cover 2 to enable the holding space 10 to form a sealed space, and the wheel outer cover 2 enables the other end of wheel shaft 15 to penetrate therethrough. Furthermore, referring to Figure 5-A, Figure 6-A and Figure 7-A, which show the adjustable mechanism 17 further added to the structure of the present invention. The adjustable mechanism 17 penetrates the movable member 12 and the wheel housing 1 and connects to the wheel shaft 15, wherein the adjustable mechanism 17 controls displacement of the movable member 12 within the holding space 10, thereby further achieving the effectiveness of controlling resistance. In the aforementioned embodiment, the wheel outer cover 2 needs to cover the outer side of the holding space 10 of the wheel housing 1 to enable sealing the holding space 10, the primary reason being to prevent the magnetic elements or the magnetic response objects from being affected by external factors, and causing serious deterioration thereof.

In the aforementioned embodiment, the first magnetic elements 13 are disposed within the movable member 12. The first magnetic elements 13 can be magnets or magnetic response objects, and the adjustable mechanism 17 is connected to form a rigid fixing with the wheel housing 1. Accordingly, the movable member 12 and the first magnetic elements 13 disposed therein are able to rotate together with the wheel housing 1. As for the fixing member 11 used to dispose the second magnetic elements 14 therein, the second magnetic elements 14 can be magnets or magnetic response objects, and the fixing member 11 is fixed to the wheel shaft 15, which is used to enable pin connection to a wheel of the wheeled walking aid.

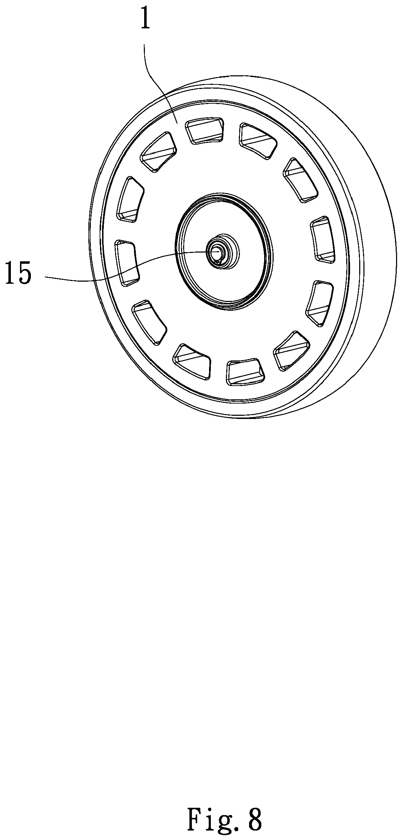

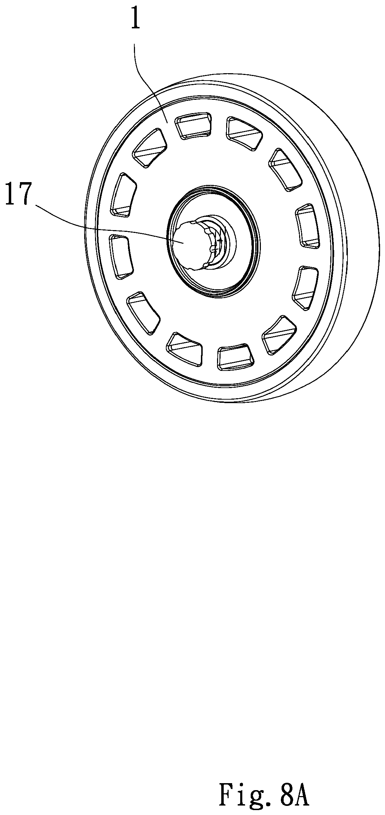

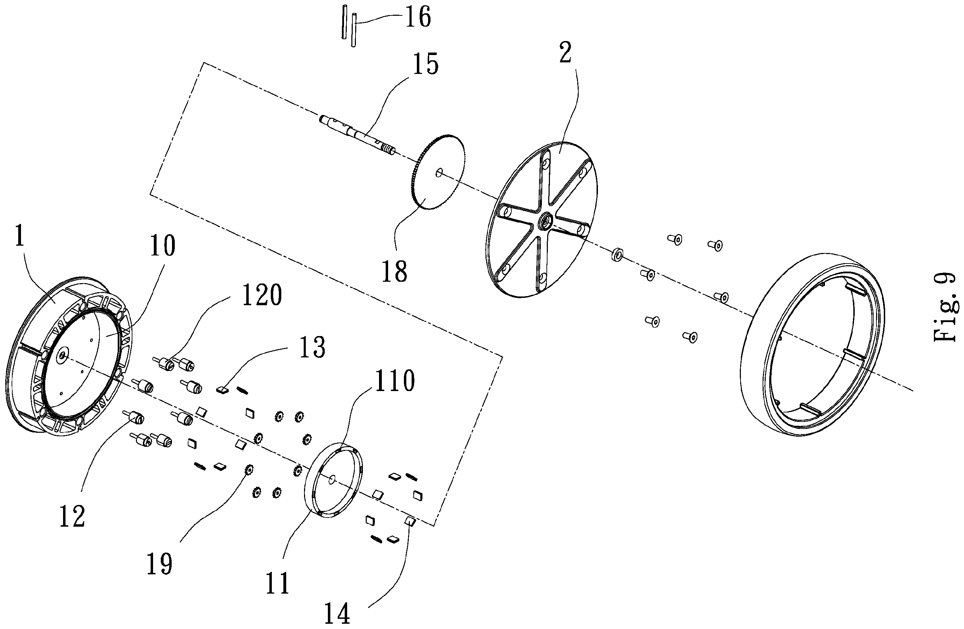

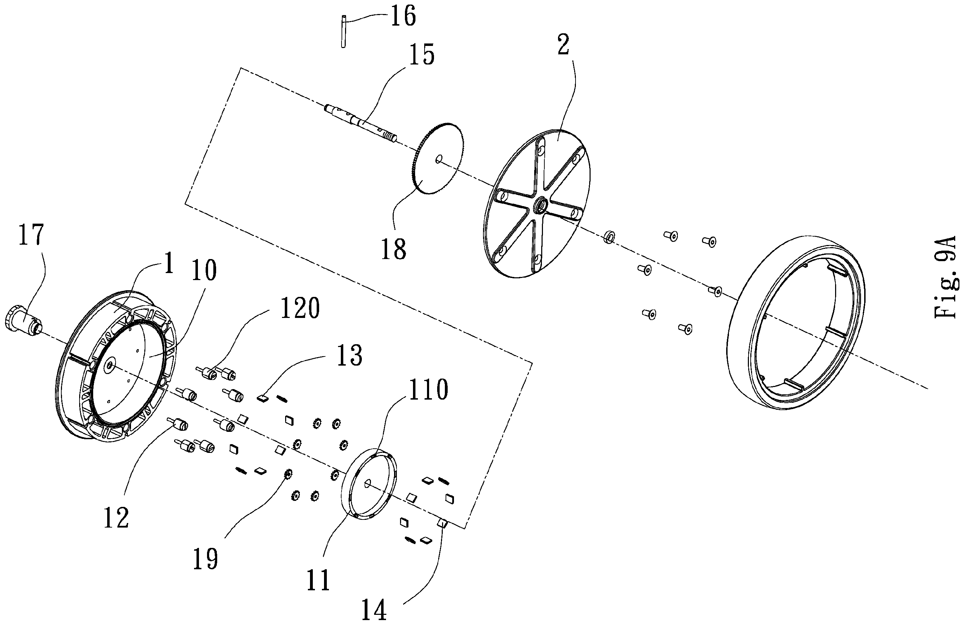

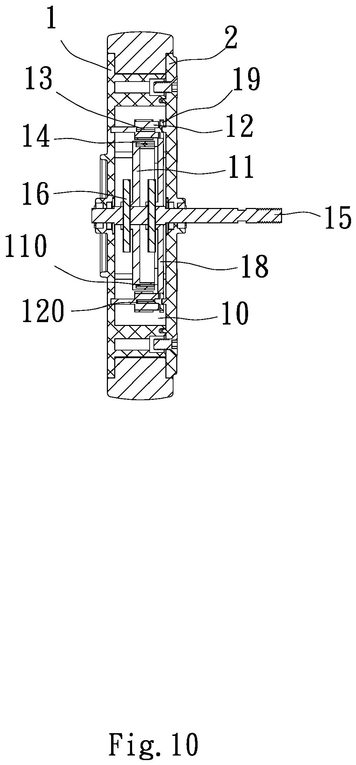

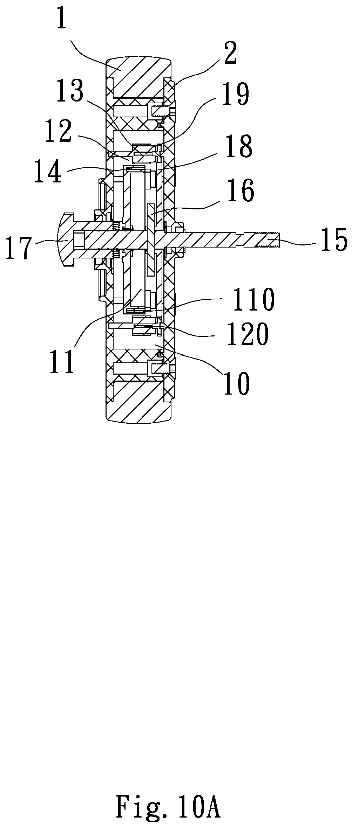

To provide the first magnetic elements 13 disposed within the movable member 12 with an autorotation function, change in magnetic force is used to increase the stabilizing effect of the wheeled frame. Referring to Figure 8, Figure 9, and Figure 10, which show an elevational schematic view of another form of a magnetic resistance mechanism, an exploded structural schematic view of the magnetic resistance mechanism, and a cross-sectional structural schematic view of the magnetic resistance mechanism of the resistance control structure of the wheeled walking aid of the present invention, respectively. The braking force control structure of the present invention primarily comprises the wheel housing 1 and the wheel outer cover 2, wherein the holding space 10 is formed in the interior of the wheel housing 1. The movable member 12, the fixing member 11, the first magnetic elements 13, the second magnetic elements 14, and the wheel shaft 15 are disposed within the holding space 10, with the further addition of a big gear wheel 18 and small gear wheels 19 disposed therein. The first magnetic elements 13 and the second magnetic elements 14 are disposed on the movable member 12 and the fixing member 11 respectively. A holding space 120 is provided within the movable member 12. The axis center of the movable member 12 is connected to the axis center of the small gear wheels 19, and the small gear wheels 19 are pin connected to the big gear wheel 18, wherein the number of the small gear wheels 19 is one or more than one. The gear mechanism is able to assist in providing the first magnetic elements 13 within the movable member 12 with an autorotation function to achieve change in the magnetic force to increase the stabilizing effect of the wheeled frame. In addition, one end of the wheel shaft 15 penetrates the fixing member 11, and the fixing insert pin 16 is used to penetrate and rigidly fix the fixing member 11. The wheel housing 1 covers the wheel outer cover 2 to enable the holding space 10 to form a sealed space, and the wheel outer cover 2 enables the other end of the wheel shaft 15 to penetrate therethrough. Furthermore, referring to Figure 8-A, Figure 9-A, and Figure 10-A, which show the adjustable mechanism 17 further added to the structure of the present invention. The adjustable mechanism 17 penetrates the fixing member 11 and the wheel housing 1 and connects to the wheel shaft 15, wherein the adjustable mechanism 17 controls displacement of the fixing member 11 within the holding space 10, thereby further achieving the effectiveness of controlling resistance. In the aforementioned embodiment, the wheel outer cover 2 needs to cover the outer side of the holding space 10 of the wheel housing 1 to enable sealing the holding space 10, the primary reason being to prevent the magnetic elements or a magnetic response objects from being affected by external factors, and causing serious deterioration thereof.

In the aforementioned embodiment, the first magnetic elements 13 are disposed within the movable member 12. The first magnetic elements 13 can be magnets or magnetic response objects, and are mutually connected to the movable member 12. Accordingly, the movable member 12 and the first magnetic elements 13 disposed therein are able to rotate together with the wheel housing 1. The fixing member 11 is used to dispose the second magnetic elements 14, and the second magnetic elements 14 can be magnets or magnetic response objects. The fixing member 11 is interconnected to the wheel shaft 15, and and the adjustable mechanism 17 is connected to the wheel housing 1, thereby enabling inter-pin connection to a wheel of the wheeled walking aid.

The movable member 12 is provided with one or more than one of the holding spaces 120 in the interior thereof to dispose the first magnetic elements 13, wherein the first magnetic elements 13 are magnets or magnetic response objects, and the number thereof can be one or more than one.

The fixing member 11 is provided with one or more than one holding space 110 in the interior thereof to dispose the second magnetic elements 14, wherein the second magnetic elements 14 are magnets or magnetic response objects, and the number thereof can be one or more than one.

Furthermore, the movable member 12 or the fixing member 11 is connected to the wheel shaft 15 through the adjustable mechanism 17, and adjustment of the adjustable mechanism 17 is used to control displacement of the movable member 12 or the fixing member 11 within the holding space 10. The first magnetic elements 13 and the second magnetic elements 14 can be magnets or magnetic response objects disposed inside the movable member 12 and the fixing member 11 respectively, and to enable achieving control of the first magnetic elements 13 or the second magnetic elements 14 within the interior of the movable member 12 or the fixing member 11 respectively, the reaction area and distance between the movable member 12 and the fixing member 11 is varied to enable changing the magnetic force strength therebetween to achieve controlling the rotational resistance of the wheel set. At the same time, the mutually generated magnetic force between the the first magnetic elements 13 and the second magnetic elements 14 is used to achieve controlling the forward speed of the wheel.

When the wheel moves forward, the magnets or magnetic response objects within the fixing member 11 and the magnetic response objects or magnets within the movable member 12 generate a magnetic force, which limits the wheel speed to achieve the effectiveness to restrict the forward speed of the wheel. The user can control the magnets or magnetic response objects within the movable member 12 or the fixing member 11 through the adjustable mechanism 17 on the wheel housing 1 to change the magnetic force area or distance or contact between the magnetic response objects or magnets of the movable member 12 and the fixing member 11, thereby further controlling the magnitude of the magnetic force to achieve the effectiveness of controlling resistance.

In the aforementioned embodiment, the movable member 12 and the fixing member 11 can be configured using the following three configurations. Configuration 1: Dispose magnets within the movable member 12 and dispose magnets within the fixing member 11. Configuration 2: Dispose magnetic response objects within the movable member 12 and dispose magnets within the fixing member 11. Configuration 3: Dispose magnets within the movable member 12 and dispose magnetic response objects within the fixing member 11. The aforementioned various configurations can equally achieve the objects of the present invention to use the mutually generated resistance between the magnetic forces to achieve controlling the forward speed of the wheel, and varying the magnetic force strength between the movable member 12 and the fixing member 11 to achieve controlling the rotational resistance of the wheel set.

As described in the aforementioned configuration 1, when magnets are disposed both within the fixing member 11 and within the movable member 12, and, as depicted in Figure 8-A, Figure 9-A, and Figure 10-A, the big gear wheel 18 and small gear wheels 19 are disposed in the holding space 10 of the wheel housing 1 and are connected to the first magnetic elements 13 within the movable member 12, then the second magnetic elements 14 on the fixing member 11 are able to produce change in the magnetic force. Accordingly, the adjustable mechanism 17 is able to effect displacement of the fixing member 11 within the holding space 10.

It is worth mentioning that in the damping oil mechanism, the damping oil 20 can be replaced by the first magnetic elements 13 and the second magnetic elements 14 to enable the adjustable mechanism 17 to adjust the movable member 12 or the fixing member 11 and further control the influencing area between the two members to achieve the effectiveness of controlling resistance. Regarding the structures of the movable member 12, the fixing member 11, the first magnetic elements 13, and the second magnetic elements 14, referring to Figure 5, Figure 6, and Figure 7, which show an elevational schematic view of the magnetic resistance mechanism, an exploded structural schematic view of the magnetic resistance mechanism, and a cross-sectional structural schematic view of the magnetic resistance mechanism of the resistance control mechanism of the wheeled walking aid of the present invention, respectively.

## Claims

1. A braking force control structure of a wheeled walking aid, which is pivot mounted on a wheel of a wheeled walking aid, comprising:
a wheel housing (1), a holding space (10) is formed within the wheel housing (1), and a fixing member (11), a movable member (12), damping oil (20), and a wheel shaft (15) are installed within the holding space (10); the fixing member (11) and the movable member (12) are respectively disposed within the holding space (10) of the wheel housing (1), wherein one end of the wheel shaft (15) penetrates the fixing member (11), and a fixing insert pin (16) is used to penetrate and rigidly fix the fixing member (11);
a wheel outer cover (2), the wheel outer cover (2) is disposed on the wheel housing (1), and covers the holding space (10) to form a sealed space, an interior of the sealed space is filled with the damping oil (20), wherein the wheel outer cover enables another end of the wheel shaft (15) to penetrate therethrough;
a ventilation structure (21), the ventilation structure (21) is disposed on an outer side of the wheel housing (1) or an outer side of the wheel outer cover (2) to enable entering and expelling of air in the sealed space.

2. The braking force control structure of a wheeled walking aid according to claim 1, wherein an adjustable mechanism (17) is further added to the structure, the adjustable mechanism (17) penetrates the movable member (12) and the wheel housing (1) and connects to the wheel shaft (15), wherein the adjustable mechanism (17) controls displacement of the movable member (12) within the holding space (10) to adjust a height of the damping oil (20) level.

3. A braking force control structure of a wheeled walking aid, which is pivot mounted on a wheel of a wheeled walking aid, comprising:
a wheel housing (1), a holding space (10) is formed within the wheel housing (1), and a movable member (12), a fixing member (11), at least one first magnetic element (13), at least one second magnetic element (14), and a wheel shaft (15) are installed within the holding space (10), wherein the first magnetic elements (13) and the second magnetic elements (14) are disposed on the movable member (12) and the fixing member (11) respectively, one end of the wheel shaft (15) penetrates the fixing member (11), and a fixing insert pin (16) is used to penetrate and fix the fixing member (11);
a wheel outer cover (2), the wheel outer cover (2) is disposed on the wheel housing (1) and covers the holding space (10) to form a sealed space, wherein the wheel outer cover (2) enables another end of the wheel shaft (15) to penetrate therethrough.

4. The braking force control structure of a wheeled walking aid according to claim 3, wherein an adjustable mechanism (17) is further added to the structure, the adjustable mechanism (17) penetrates the movable member (12) and the wheel housing (1) and connects to the wheel shaft (15), wherein the adjustable mechanism (17) controls displacement of the movable member (12) within the holding space (10) to adjust an effective distance and area between the two magnetic elements (13,14).

5. The braking force control structure of a wheeled walking aid according to claim 3, wherein the first magnetic elements (13) are magnets or magnetic response objects.

6. The braking force control structure of a wheeled walking aid according to claim 3, wherein the second magnetic elements (14) are magnets or magnetic response objects.

7. A braking force control structure for a wheeled walking aid which is pivot mounted on a wheel of a wheeled walking aid comprising:
a wheel housing (1), a holding space (10) is formed within the wheel housing (1), and a movable member (12), a fixing member (11), at least one first magnetic element (13), at least one second magnetic element (14), at least one small gear wheel (19), a big gear wheel (18), and a wheel shaft (15) are installed within the holding space (10), wherein the first magnetic elements (13) and the second magnetic elements (14) are disposed on the movable member (12) and the fixing member (11) respectively; the first magnetic elements (13) are disposed within the movable member (12), and the movable member (12) extends to the small gear wheels (19), wherein the big gear wheel (18) is fixedly connected to the wheel shaft (15) and moves relative to the wheel, the small gear wheels (19) mutually connect with the big gear wheel (18), one end of the wheel shaft (15) penetrates the fixing member (11), and a fixing insert pin (16) is used to penetrate and fix the fixing member (11), wherein the big gear wheel (18) and the small gear wheels (19) are disposed within the holding space (10);
a wheel outer cover (2), the wheel outer cover (2) is disposed on the wheel housing (1) and covers the holding space (10) to form a sealed space, wherein the wheel outer cover (2) enables another end of the wheel shaft (15) to penetrate therethrough.

8. The braking force control structure of a wheeled walking aid according to claim 7, wherein an adjustable mechanism (17) is further added to the structure, the adjustable mechanism (17) penetrates the fixing member (11) and the wheel housing (1) and connects to the wheel shaft (15), wherein the adjustable mechanism (17) controls displacement of the fixing member (11) within the holding space (10) to adjust an effective distance and area between the two magnetic elements (13, 14).

## Patentansprüche

1. Bremskraftsteuerungsstruktur einer fahrbaren Gehhilfe, die auf einem Rad einer fahrbaren Gehhilfe schwenkbar gelagert ist,
umfassend:
einen Radkasten (1), wobei ein Aufnahmeraum (10) in dem Radkasten (1) ausgebildet ist, wobei ein Befestigungselement (11), ein bewegliches Element (12), Dämpfungsöl (20) und eine Radachse (15) in dem Aufnahmeraum (10) installiert sind, wobei das Befestigungselement (11) und das bewegliche Element (12) entsprechend in dem Aufnahmeraum (10) des Radkastens (1) angeordnet sind, wobei ein Ende der Radachse (15) das Befestigungselement (11) durchdringt, und ein Fixiersteckstift (16) wird zum Eindringen in und starren Befestigen des Befestigungselements (11) verwendet;
eine äußere Radabdeckung (2), wobei die äußere Radabdeckung (2) an dem Radkasten (1) angeordnet ist und den Aufnahmeraum (10) abdeckt, um einen abgedichteten Raum auszubilden, wobei ein Innenraum des abgedichteten Raums mit dem Dämpfungsöl (20) gefüllt ist, wobei die äußere Radabdeckung (2) es einem anderen Ende der Radachse (15) ermöglicht, durchzudringen;
eine Lüftungsstruktur (21), wobei die Lüftungsstruktur (21) an einer äußeren Seite des Radkastens (1) oder einer äußeren Seite der äußeren Radabdeckung (2) angeordnet ist, um Eindringen und Ausstoßen von Luft in den abgedichteten Raum zu ermöglichen.

2. Bremskraftsteuerungsstruktur einer fahrbaren Gehhilfe gemäß Anspruch 1, bei welcher ferner ein einstellbarer Mechanismus (17) zu der Struktur hinzugefügt ist, wobei der einstellbare Mechanismus (17) das bewegliche Element (12) und den Radkasten (1) durchdringt und sich mit der Radachse (15) verbindet, wobei der einstellbare Mechanismus (17) die Verschiebung des beweglichen Elements (12) in dem Aufnahmeraum (10) kontrolliert, um die Höhe des Levels des Dämpfungsöls (20) einzustellen.

3. Bremskraftsteuerungsstruktur einer fahrbaren Gehhilfe, die auf einem Rad einer fahrbaren Gehhilfe schwenkbar gelagert ist,
umfassend:
einen Radkasten (1), wobei ein Aufnahmeraum (10) in dem Radkasten (1) ausgebildet ist, wobei ein bewegliches Element (12), ein Befestigungselement (11), zumindest ein erstes magnetisches Element (13), zumindest ein zweites magnetisches Element (14) und eine Radachse (15) in dem Aufnahmeraum (10) installiert sind, wobei die ersten magnetischen Elemente (13) und die zweiten magnetischen Elemente (14) entsprechend an dem beweglichen Element (12) und dem Befestigungselement (11) angeordnet sind, wobei ein Ende der Radachse (15) das Befestigungselement (11) durchdringt, und wobei ein Fixiersteckstift (16) zum Eindringen und Befestigen des Befestigungselements (11) verwendet wird;
eine äußere Radabdeckung (2), wobei die äußere Radabdeckung (2) an dem Radkasten (1) angeordnet ist und den Aufnahmeraum (10) abdeckt, um einen abgedichteten Raum zu bilden, wobei die äußere Radabdeckung (2) es dem anderen Ende der Radachse (15) ermöglicht, dadurch durchzudringen.

4. Bremskraftsteuerungsstruktur einer fahrbaren Gehhilfe gemäß Anspruch 3, bei welcher ferner ein einstellbarer Mechanismus (17) zu der Struktur hinzugefügt ist, wobei der einstellbare Mechanismus (17) das bewegliche Element (12) und den Radkasten (1) durchdringt und sich mit der Radachse (15) verbindet, wobei der einstellbare Mechanismus (17) die Verschiebung des beweglichen Elements (12) in dem Aufnahmeraum (10) kontrolliert, um eine effektive Distanz und Fläche zwischen den zwei magnetischen Elementen (13, 14) einzustellen.

5. Bremskraftsteuerungsstruktur einer fahrbaren Gehhilfe gemäß Anspruch 3, bei welcher die ersten magnetischen Elemente (13) Magnete oder magnetische Ansprechelemente sind.

6. Bremskraftsteuerungsstruktur einer fahrbaren Gehhilfe gemäß Anspruch 3, bei welcher die zweiten magnetischen Elemente (14) Magnete oder magnetische Ansprechelemente sind.

7. Bremskraftsteuerungsstruktur einer fahrbaren Gehhilfe, die auf einem Rad einer fahrbaren Gehhilfe schwenkbar gelagert ist,
umfassend:
einen Radkasten (1), wobei ein Aufnahmeraum (10) in dem Radkasten (1) ausgebildet ist, und wobei ein bewegliches Element (12), ein Befestigungselement (11), zumindest ein erstes magnetisches Element (13), zumindest ein zweites magnetisches Element (14), zumindest ein kleines Zahnrad (19), ein großes Zahnrad (18) und eine Radachse (15) in dem Aufnahmeraum (10) installiert sind, wobei die ersten magnetischen Elemente (13) und die zweiten magnetischen Elemente (14) entsprechend an dem beweglichen Element (12) und dem Befestigungselement (11) angeordnet sind, wobei die ersten magnetischen Elemente (13) in dem beweglichen Element (12) angebracht sind und wobei sich das bewegliche Element (12) zu den kleinen Zahnrädern (19) erstreckt, wobei das große Zahnrad (18) fest mit der Radachse (15) verbunden ist und sich relativ zu dem Rad bewegt, wobei sich die kleinen Zahnräder (19) gegenseitig mit dem großen Zahnrad (18) verbinden, wobei ein Ende der Radachse (15) das Befestigungselement (11) durchdringt und wobei ein Fixiersteckstift (16) zum Eindringen und Befestigen des Befestigungselements (11) verwendet wird, wobei das große Zahnrad (18) und die kleinen Zahnräder (19) in dem Aufnahmeraum (10) angeordnet sind;
eine äußere Radabdeckung (2), wobei die äußere Radabdeckung (2) an dem Radkasten (1) angeordnet ist und den Aufnahmeraum (10) abdeckt, um einen abgedichteten Raum zu bilden, wobei die äußere Radabdeckung (2) es dem anderen Ende der Radachse (15) ermöglicht, dadurch durchzudringen.

8. Bremskraftsteuerungsstruktur einer fahrbaren Gehhilfe gemäß Anspruch 7, bei welcher ferner ein einstellbarer Mechanismus (17) zu der Struktur hinzugefügt ist, wobei der einstellbare Mechanismus (17) das Fixierelement (11) und den Radkasten (1) durchdringt und sich mit der Radachse (15) verbindet, wobei der einstellbare Mechanismus (17) die Verschiebung des Fixierelements (11) in dem Aufnahmeraum (10) kontrolliert, um eine effektive Distanz und Fläche zwischen den zwei magnetischen Elementen (13, 14) einzustellen.

## Revendications

1. Structure de commande de force de freinage d'un déambulateur avec roues qui est montée par pivotement sur une roue d'un déambulateur avec roues, comprenant:
un logement de roue (1), un espace de maintien (10) est formé dans le logement de roue (1), et un élément de fixation (11), un élément mobile (12), de l'huile d'amortissement (20), et un arbre de roue (15) sont installés dans l'espace de maintien (10); l'élément de fixation (11) et l'élément mobile (12) sont respectivement disposés dans l'espace de maintien (10) du logement de roue (1), dans lequel une extrémité de l'arbre de roue (15) pénètre l'élément de fixation (11), et un axe d'insert de fixation (16) est utilisé pour pénétrer et fixer rigidement l'élément de fixation (11);
un couvercle extérieur de roue (2), le couvercle extérieur de roue (2) est disposé sur le logement de roue (1), et recouvre l'espace de maintien (10) pour former un espace scellé, un intérieur de l'espace scellé est rempli de l'huile d'amortissement (20), dans laquelle le couvercle extérieur de roue permet à une autre extrémité de l'arbre de roue (15) de pénétrer au travers de celui-ci;
une structure de ventilation (21), la structure de ventilation (21) est disposée sur un côté extérieur du logement de roue (1) ou un côté extérieur du couvercle extérieur de roue (2) pour permettre l'entrée et l'expulsion d'air dans l'espace scellé,

2. Structure de commande de force de freinage d'un déambulateur avec roues selon la revendication 1, dans laquelle un mécanisme ajustable (17) est en outre ajouté à la structure, le mécanisme ajustable (17) pénètre l'élément mobile (12) et le logement de roue (1) et se raccorde à l'arbre de roue (15), dans laquelle le mécanisme ajustable (17) commande le déplacement de l'élément mobile (12) dans l'espace de maintien (10) pour ajuster une hauteur du niveau de l'huile d'amortissement (20).

3. Structure de commande de force de freinage d'un déambulateur avec roues qui est monté par pivotement sur une roue d'un déambulateur avec roues, comprenant:
un logement de roue (1), un espace de maintien (10) est formé dans le logement de roue (1), et un élément mobile (12), un élément de fixation (11), au moins un premier élément magnétique (13), au moins un second élément magnétique (14), et un arbre de roue (15) sont installés dans l'espace de maintien (10), dans lequel les premiers éléments magnétiques (13) et les seconds éléments magnétiques (14) sont disposés sur l'élément mobile (12) et l'élément de fixation (11) respectivement, une extrémité de l'arbre de roue (15) pénètre l'élément de fixation (11), et un axe d'insert de fixation (16) est utilisé pour pénétrer et fixer l'élément de fixation (11);
un couvercle extérieur de roue (2), le couvercle extérieur de roue (2) est disposé sur le logement de roue (1) et recouvre l'espace de maintien (10) pour former un espace scellé, dans laquelle le couvercle extérieur de roue (2) permet à une autre extrémité de l'arbre de roue (15) de pénétrer au travers de celui-ci.

4. Structure de commande de force de freinage d'un déambulateur avec roues selon la revendication 3, dans lequel un mécanisme ajustable (17) est en outre ajouté à la structure, le mécanisme ajustable (17) pénètre l'élément mobile (12) et le logement de roue (1) et se raccorde à l'arbre de roue (15), dans laquelle le mécanisme ajustable (17) commande le déplacement de l'élément mobile (12) dans l'espace de maintien (10) pour ajuster une distance et zone effectives entre les deux éléments magnétiques (13, 14).

5. Structure de commande de force de freinage d'un déambulateur avec roues selon la revendication 3, dans lequel les premiers éléments magnétiques (13) sont des aimants ou des objets à réponse magnétique.

6. Structure de commande de force de freinage d'un déambulateur avec roues selon la revendication 3, dans lequel les seconds éléments magnétiques (14) sont des aimants ou des objets à réponse magnétique.

7. Structure de commande de force de freinage d'un déambulateur avec roues qui est montée par pivotement sur une roue d'un déambulateur avec roues, comprenant:
un logement de roue (1), un espace de maintien (10) est formé dans le logement de roue (1), et un élément mobile (12), un élément de fixation (11), au moins un premier élément magnétique (13), au moins un second élément magnétique (14), au moins une petite roue d'engrenage (19), une grande roue d'engrenage (18), et un arbre de roue (15) sont installés dans l'espace de maintien (10), dans lequel les premiers éléments magnétiques (13) et les seconds éléments magnétiques (14) sont disposés sur l'élément mobile (12) et l'élément de fixation (11) respectivement ; les premiers éléments magnétiques (13) sont disposés dans l'élément mobile (12), et l'élément mobile (12) s'étend vers les petites roues d'engrenage (19), dans lequel la grande roue d'engrenage (18) est raccordée fixement à l'arbre de roue (15) et se déplace par rapport à la roue, les petites roues d'engrenage (19) se raccordent mutuellement à la grande roue d'engrenage (18), une extrémité de l'arbre de roue (15) pénètre l'élément de fixation (11), et un axe d'insert de fixation (16) est utilisé pour pénétrer et fixer l'élément de fixation (11), dans laquelle la grande roue d'engrenage (18) et les petites roues d'engrenage (19) sont disposées dans l'espace de maintien (10);
un couvercle extérieur de roue (2), le couvercle extérieur de roue (2) est disposé sur le logement de roue (1) et recouvre l'espace de maintien (10) pour former un espace scellé, dans laquelle le couvercle extérieur de roue (2) permet à une autre extrémité de l'arbre de roue (15) de pénétrer au travers de celui-ci.

8. Structure de commande de force de freinage d'un déambulateur avec roues selon la revendication 7, dans lequel un mécanisme ajustable (17) est en outre ajouté à la structure, le mécanisme ajustable (17) pénètre l'élément de fixation (11) et le logement de roue (1) et se raccorde à l'arbre de roue (15), dans laquelle le mécanisme ajustable (17) commande le déplacement de l'élément de fixation (11) dans l'espace de maintien (10) pour ajuster une distance et zone effectives entre les deux éléments magnétiques (13, 14).
